# EUROPEAN PATENT SPECIFICATION

(11) **EP 2 264 859 B1**
(45) Date of publication and mention of the grant of the patent: **28.11.2012**
(21) Application number: 09163054.1
(22) Date of filing: 18.06.2009
(51) Int. Cl.: H02K 1/02, H02K 1/27, H02K 11/00

(54) **A track-bound vehicle electric machine and a driving arrangement for a track-bound vehicle**
Elektrische Maschine für ein spurgebundenes Fahrzeug und Antriebsanordnung für ein spurgebundenes Fahrzeug
Machine électrique de véhicule relié à des rails et agencement de commande pour véhicule relié à des rails

(43) Date of publication of application: 22.12.2010
(73) Proprietor: Bombardier Transportation GmbH, 10785 Berlin (DE)
(72) Inventor: Sandberg, Åsa, 722 40, Västeras (SE); Kumm, Thomas, 725 97, Västeras (SE); Andersson, Svante, 724 81, Västeras (SE)
(74) Representative: Olsson, Jan

(56) References cited:
- WO-A1-01/47091
- US-A- 5 907 202

## Description

### TECHNICAL FIELD OF THE INVENTION AND BACKGROUND ART

The present invention relates to a track-bound vehicle electric machine comprising:
a stator having a stator body with a stator winding wound therearound and configured to electrically create a plurality of stator poles disposed around the inner periphery of the stator body, means configured to connect said stator winding to an AC source or receiver, a rotor rotatably disposed within said stator and having a plurality of permanent magnets, and an electrical insulation system with insulating means comprising first insulating means insulating said stator winding with respect to earth by at least insulating them with respect to said stator body, as well as a driving arrangement for a track-bound vehicle having such an electric machine.

Such an electric machine may operate as motor and/or generator, although this disclosure will focus mainly on the operation thereof as a motor.

By using a plurality of permanent magnets to produce the magnetic flux of the rotor a synchronous motor called permanent magnet synchronous motor is achieved. Such a motor has lower rotor losses compared to an induction motor and thus higher efficiency. It can also be built with a higher pole number, compared to an induction motor, without sacrificing performance, so that it can have a higher torque capability, features making such an electric machine particularly interesting as a track-bound vehicle electric machine for which a high torque capability with respect to a determined size of the motor is an important feature.

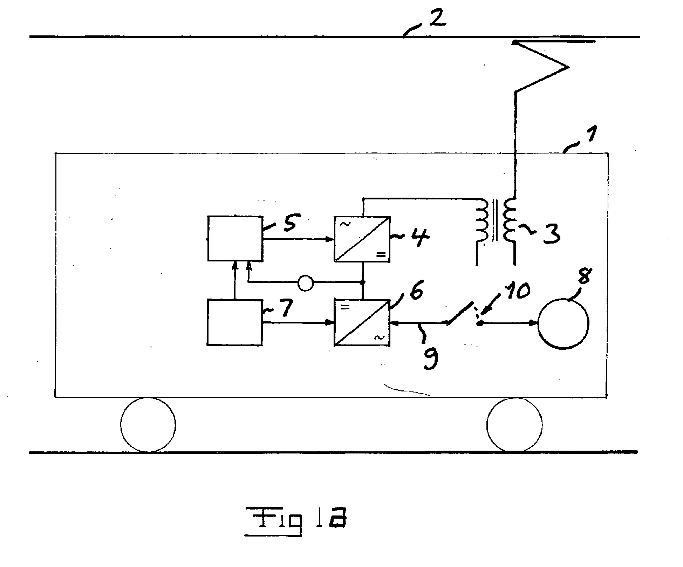

Fig 1a illustrates schematically how an electric machine of this type is normally arranged in a track-bound vehicle 1, such as a rail vehicle, for generating a traction force of this vehicle. It is shown how the vehicle is in this case configured to move along an AC-supply line 2, which accordingly acts as a AC source and which may for example carry a one-phase alternating voltage of 15 kV and 16²/₃ Hz (Sweden) and 25 kV and 50 Hz (Denmark). However, the invention is not restricted to such an AC source, but the vehicle may have any other conceivable corresponding source, such as a diesel motor.

The vehicle has a transformer 3 for transforming the voltage from the supply line 2 to a suitable level. The secondary winding of the transformer is connected to a converter 4 making it possible to obtain a control of the power flow between the supply line and the vehicle. This converter is controlled by a first control unit 5 for generating a direct voltage of for example 1.5-3kV fed to a further converter 6 controlled through a second control unit 7 for generating a train of pulses according to a Pulse Width Modulation pattern for delivering a three-phase alternating voltage connected to the stator winding (not shown) of an electric machine 8 for driving the vehicle. The second control unit 7 will receive orders from the driver of the vehicle for adapting the frequency of the voltage delivered to the stator winding to the vehicle speed desired.

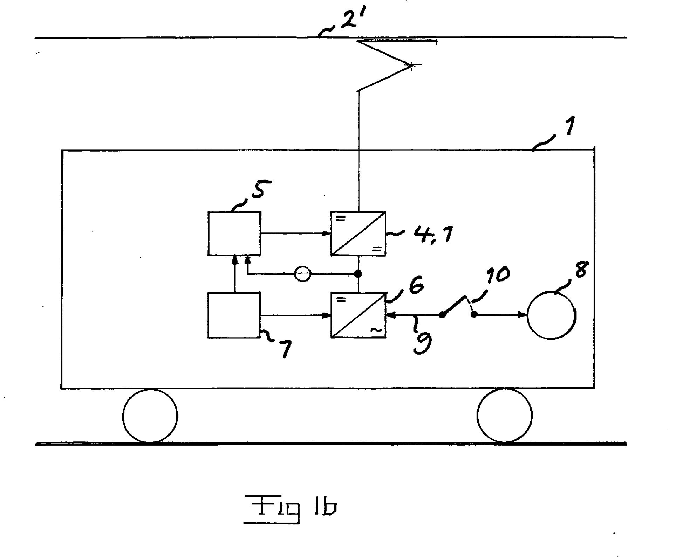

Fig 1b illustrates the case of having a power supply line 2' in the form of a DC-source, and then the transformer 3 and the rectifying converter 4 of Fig 1a are not needed. However, the DC-power supply line 2' may be connected to a DC/DC-converter 4.1 controlled by the control unit 5 if the DC-power supply voltage is for example 3 kV for adjusting the voltage level to for example 1500 V. For low power-supply voltages or even 3 kV the DC/DC-converter 4.1 may not be needed. An inductor will then be connected in series with the DC supply instead.

It is shown how the line 9 (a three-phase line) connecting the converter 6 and the machine 8 may be provided with a contactor 10, in the reality or mostly one such contactor per phase, for making it possible to stop the feeding of power to the machine 8 when this is desired. Such a desire exists if for instance a short-circuit failure occurs in connection with the stator winding of the machine 8. Such a short-circuit failure may result from any particle entering the electric machine and causing a rupture in said insulating means or any other type of failure of said electrical insulation system.

However, such short-circuits impose particular problems in a so-called permanent magnet machine not present in the case of an induction machine. This is due to the fact that during a short-circuit in a permanent magnet machine the magnetic flux from the permanent magnets of the rotor is feeding energy into the short-circuit as long as the rotor is rotating and the magnets are producing a flux that is linked with the short-circuit. This could potentially lead to elevated temperature inside the machine in spite of a disconnecting of the line 9 by controlling the contactor 10 due to the large current produced. This large current may in the worst case result in such high temperatures in the short-circuit spot that large volumes of smoke will be generated through evaporation of material of insulating means of the machine. Such smoke may cause safety problems for the surroundings, especially in for example trains, and create panic among passengers. Accordingly, this has to be avoided.

One known way of obtaining this is to combine an opening of a said contactor with a control of powerful cooling means for keeping said temperature sufficiently low for avoiding smoke generation upon detection of a said short-circuit. However, this solution is rather costly and lacks reliability owing to the external control necessary.

Another known solution to the problem is to short-circuit the machine and design it with a high inductance which enables the short-circuit current to be close to the rated machine current. However, designing a permanent magnet machine for high inductance so as to limit the short-circuit current to the rated current reduces the peak output power of the machine and thus makes it heavy and bulky.

US 6 313 560 B1and WO 01/47091 A1 disclose another way to address the above problem. The stator and the rotor material carrying the magnetic flux is in these machines of ferrite material, which is heated up by the heat generated from the short-circuit. When the ferrite material reaches its Curie temperature the reluctance will be very high which eliminates the rotor magnets to feed energy into the short-circuit. The disadvantage of this solution is the ferrite powder material pressed together to form the stator and the rotor and if the machine is designated for large torque application the size of the stator and rotor require very large pressing machines to manufacture the stator and rotor. Another disadvantage of using ferrite material to build stator and rotor of an electric machine is that such a material is not as robust as such components produced from conventional steel laminations. Furthermore, the cost of ferrite material is mostly higher than for steel.

Accordingly, it is desired to find an alternative solution to the problem discussed above.

### SUMMARY OF THE INVENTION

The object of the present invention is to provide a track-bound vehicle electric machine of the type defined in the introduction which at least partly solves the above problems arising in the case of occurrence of a short-circuit in connection with said stator winding of such an electric machine.

This object is according to the invention obtained by providing such a machine, in which the material of said permanent magnets, the design of said rotor and the material of insulating means of said electric insulating system are selected so that would upon occurrence of a short-circuit failure in connection with said stator winding in operation of said machine with rotating rotor said permanent magnets reach a threshold temperature T₀ as of which the magnetic flux from the permanent magnets in a gap between said stator body and the rotor is zero or not linked with the stator winding this will happen at a temperature T_{SW} in said stator winding resulting in a temperature Tᵢ of said insulating means being below the temperature Tₑᵥ at which the material of said insulating means will start to evaporate.

By selecting the material of said permanent magnets, the design of said rotor and the material of insulating means of the electric insulating system in this way the temperature at which the material of the insulating means will start to evaporate may never be reached, since the magnet flux from the permanent magnets in said gap will at a lower temperature of the stator winding be zero or not linked with the stator winding in case of a stator winding failure, so that there will be no magnetic flux from the rotating rotor feeding the short-circuit. Thus, an inherent safety of the electric machine will be obtained, since it will efficiently prevent generation of smoke to occur upon occurrence of a short-circuit failure in connection with a stator winding of the machine without any need of external control and cooling arrangements. Would the permanent magnets reach said threshold temperature they would not produce any magnetic flux in said gap, so that no currents are induced in the stator winding by the rotating rotor. No currents in the stator windings means that the permanent magnets are slightly cooled down and then said magnetic flux is not zero any longer and the permanent magnets start to feed energy into the short-circuit spot again. Then the permanent magnets will be heated again and so on.

According to an embodiment of the invention the temperature Tᵢ of said insulating means at said threshold temperature T₀ of said permanent magnets is at least 20°C, preferably at least 50°C below the temperature Tₑᵥ at which the material of said insulating means will start to evaporate. A selection of the three parameters of the material of the permanent magnets, the design of the rotor and the material of said insulating means, resulting in such a temperature of said insulating means at said threshold temperature of the permanent magnets with respect to said evaporation temperature results in an advantageous and sufficient safety margin reliably excluding any risk of generation of disturbing smoke upon occurrence of a said short-circuit failure.

According to another embodiment of the invention said threshold temperature T₀ of said permanent magnets is 40°C-150°C higher than the highest possible temperature of said permanent magnets in normal operation of said machine without any short-circuit failure occurrence. It is suitable to select such a material for the permanent magnets ensuring that said threshold temperature will never be reached during normal operation of the machine. However, the threshold temperature may still be reached before the temperature of electric machine parts, such as insulation material thereof, gets too high.

According to another embodiment of the invention said permanent magnets are buried in a body of the rotor having rotor bridges of ferromagnetic material between adjacent permanent magnets configured to create a magnetic flux path between said magnets inside the rotor through which a portion of the magnetic flux between said permanent magnets is flowing in normal operation of said machine. This means that the magnetic flux from the permanent magnets does not have to be zero for obtaining a zero magnetic flux in said gap. This means that the permanent magnets will never be completely demagnetized upon occurrence of a said short-circuit, so that they may be used again. Furthermore, this makes it possible to use a material having a comparatively high Curie temperature, such as SmCo, for the permanent magnets of the electric machine.

According to another embodiment of the invention said permanent magnets are mounted at or close to the outer peripheral surface of said rotor, and said permanent magnets are of a material having a Curie temperature T_{C} corresponding to said threshold temperature T₀.
According to another embodiment of the invention said material of said permanent magnets is NdFeB or ferrite. These materials have such low Curie temperature that there is no need to use insulating material for the electrical insulation system withstanding much higher temperatures than about 300°C, even if the permanent magnets are mounted close to said outer peripheral surface of the rotor.

According to another embodiment of the invention said material of said permanent magnets is SmCo. Such a material has a higher Curie temperature than the materials according to the embodiment previously mentioned, which makes it favourable to combine this material choice with a buried arrangement of said permanent magnets for lowering said threshold temperature T₀ and by that reduce the need of high temperature resistance of said insulating material.

According to another embodiment of the invention said first insulating means surrounding said stator winding comprises insulating material such as mica/glass tapes, polyimide films and other materials impregnated and cured with a silicone or epoxy resin wound around said stator winding allowing the temperature thereof to at least temporarily reach 280°C - 350°C at said threshold temperature T₀ of said permanent magnets. It has turned out that such a material of said insulating means is suitable for an electric machine having the permanent magnets buried and made of said material.

According to another embodiment of the invention said stator winding comprises coils each made of a plurality of individual conductors in a bundle mutually insulated by being surrounded by a second insulating means of said electrical insulation system in the form of a layer of a material having a fusing temperature T_{f} being at least 10°C lower than the fusing temperature of said first insulating means. Said second insulating means surrounding said individual conductors may by this fuse and by that create an electric contact between adjacent such conductors in the bundle before the fusing temperature of the first insulating means is reached. This results in a reduction of the number of turns in said coil and by that of the magnetic flux generated, so that the density of the current therein will be lowered and by that the temperature resulting from this current be lowered. This will then contribute to the prevention of fusing of said first insulating means insulating the stator winding with respect to earth.

According to another embodiment of the invention said fusing temperatures T_{f} of said second insulating means is at least 10°C, preferably at least 20°C, lower than said temperature T_{sw} in said stator winding at said threshold temperature T₀ of said permanent magnets upon occurrence of a short-circuit failure in connection with the stator winding. This means that said second insulating means will fuse before the permanent magnets will reach said threshold temperature and start to counteract further temperature rise by a successive reduction of the number of turns in a said coil of the stator winding. Accordingly, the present invention is not restricted to the case that the threshold temperature T₀ as of which the magnetic flux from the permanent magnets in a gap between the stator body and the rotor is zero is in fact reached; but it also covers the case that this temperature is never reached. This means a potential possibility to save the permanent magnets and all parts of the electrical insulation system except for said second insulating means in the case of an occurrence of a short-circuit in connection with a stator winding of the machine.

According to another embodiment of the invention said second insulating means is made of a polyimide film. Such a material may be selected to have a fusing temperature suitable for this application.

The invention also relates to a driving arrangement for a track-bound vehicle comprising an electric machine according to the present invention and a converter configured to deliver an alternating voltage to said stator winding. The advantages of such a driving arrangement as well as such a driving arrangement further comprising a control device for controlling said converter by Pulse Width Modulation appear clearly from the above-discussion of an electric machine according to the present invention in connection with the introductory portion of this disclosure.

The invention also relates to a use of an electric machine according to the present invention in a driving arrangement for generating a traction force of a track-bound vehicle as well as a track-bound vehicle having a driving arrangement for generating a traction force of the vehicle including at least one electric machine according to the present invention.

Further advantages as well as advantageous features of the invention will appear from the following description of embodiments of the invention.

### BRIEF DESCRIPTION OF THE DRAWINGS

With reference to the appended drawings below follows a specific description of embodiments of the invention cited as examples. In the drawings:
- Fig 1 a: is a very schematic view illustrating how a track-bound vehicle electric machine of the type to which the pre- sent invention is directed may be connected and con- trolled in such a vehicle,
- Fig 1 b: is a view similar to Fig 1a for the case of a DC-supply line instead of an AC-supply line for feeding the electric machine.
- Fig 2: is a very schematic side elevation view illustrating the stator and the rotor of an electric machine of the type, to which the present invention relates,
- Fig 3: is a simplified enlarged view of a slot of the stator body shown in Fig 2 provided with stator winding coils,
- Fig 4: is a view of a part of the electric machine according to Fig 2 showing the magnetic flux lines created by the permanent magnets of the rotor in no load conditions of the machine,
- Fig 5a: is an enlarged view corresponding to Fig 4 of a part thereof, in which only magnetic flux lines belonging to magnetic flux paths closed in rotor bridges of ferro- magnetic material are shown,
- Fig 5b: is a view corresponding to Fig 5a showing magnetic flux paths closed in other such rotor bridges,
- Fig 6: is a graph of magnetic flux density B versus magnetic field strength H for a NeFeB permanent magnet for dif- ferent temperatures,
- Fig 7: is a graph of temperatures in conductors of a stator winding coil in an electric machine according to an em- bodiment of the invention versus time after occurrence of a said short-circuit failure for different number of adjacent conductors short-circuited with respect to each other,
- Fig 8: is a simplified view similar to Fig 2 of only the rotor of an electric machine according to a second embodiment of the invention, and
- Fig 9: is a view corresponding to Fig 8 of a rotor in an electric machine according to a third embodiment of the inven- tion.

### DETAILED DESCRIPTION OF EMBODIMENTS OF THE INVENTION

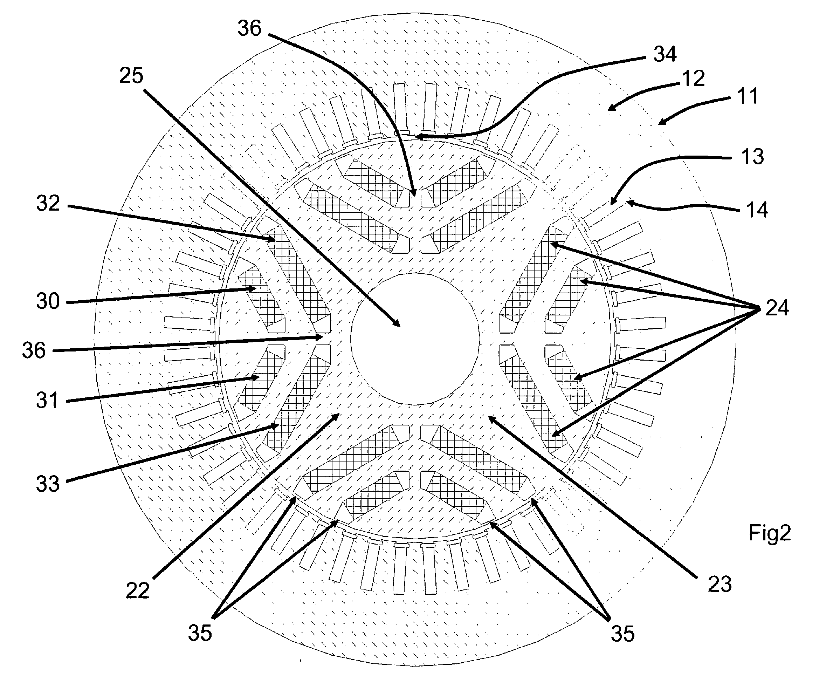

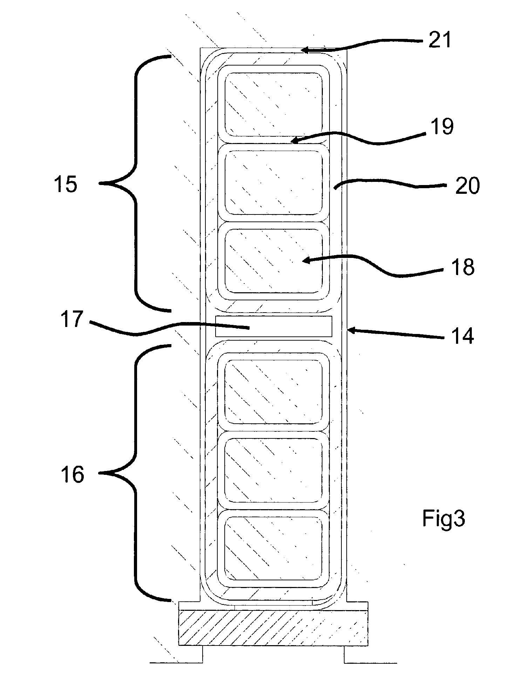

Fig 2 shows schematically in an axial end view some of the main parts of an electric machine of the type to which the present invention relates. Reference is at the same time made to Fig 3. The invention is not restricted to any power levels of such machines, but these are normally designed to consume/deliver powers of some kW - several MW. This track-bound vehicle electric machine has a stator 11 with a stator body 12 with a stator winding 13 wound therearound and configured to electrically create a plurality of stator poles disposed around the inner periphery of the stator body. The stator winding 13 is received in radial slots 14 in the stator body, extending over the entire length of this body. 48 slots are in this way uniformly distributed around the inner periphery of the stator body 12, so that 12 said slots belong to one stator pole in the case of a four-poles electric machine as in the embodiment shown in Fig 2.

The stator winding comprises coils 15, 16 in the form of a bottom coil 15 and a top coil 16 in each said slot 14 separated by coil spacer elements 17 for tolerance adjustment. Each coil is form wound and made of a plurality of individual conductors 18 in a bundle mutually insulated by being surrounded by a second insulating means 19 of a suitable material, such as polyimide film, corona resistant such film for stator winding voltages above 800V (see further below). Each coil is surrounded by a first insulating means in the form of a main insulation 20 comprising insulating material such as mica/glass tapes, polyimide films and other materials impregnated and cured with a silicone resin. A slot liner 21 is arranged for protection of the coils during assembly and functions also as a moisture barrier. Said first insulating means insulates the stator winding with respect to earth by insulating it with respect to the stator body 12.

The electric machine further comprises a rotor 22 with a rotor body 23, which as the stator body is preferably made of a high number of thin steel laminates pressed together for keeping eddy current losses in these bodies at low levels. The rotor body 23 is rotatably disposed within the stator and has a plurality of permanent magnets 24 buried therein. The rotor body 23 is rigidly connected with respect to rotation to a rotor axle 25, which is connected to the wheel axle of the vehicle 1, possibly through a gearbox.

The permanent magnets are arranged according to a "large V" and "small V" per pole so as to form two north poles 26, 27 and two south poles 28, 29. It is pointed out that although Fig 2 indicates that four magnets, two small ones 30, 31 and two larger ones 32, 33, are arranged per pole each of these magnets may be formed by a plurality of magnets successively introduced into a longitudinal slot for each of these magnets formed in the rotor body.

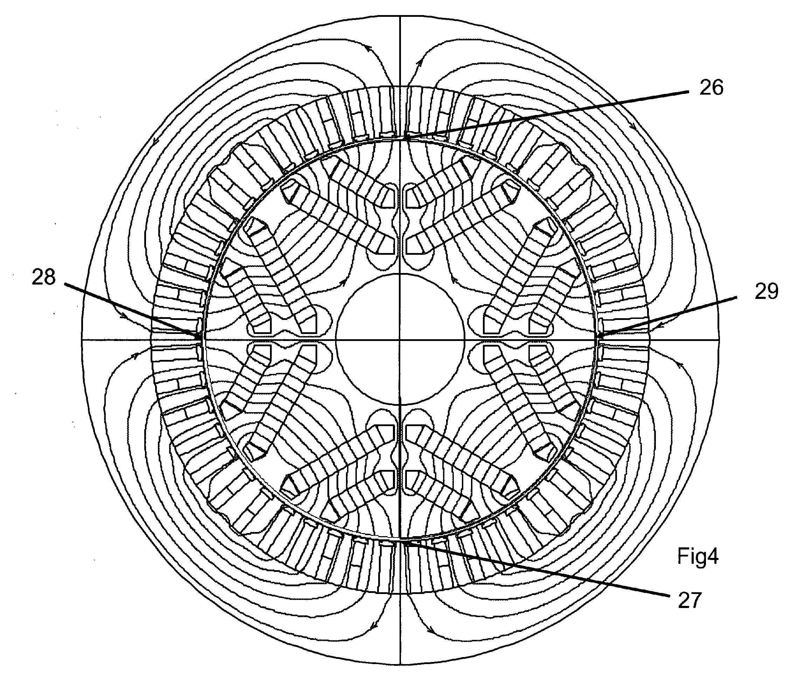

The extension of the magnetic flux lines of the electric machine shown in Fig 2 is schematically illustrated for a part thereof in Fig 4. It is shown how the magnetic flux (see arrows) goes from the permanent magnets of the rotor belonging to the north pole 26 out into the stator body for entering the rotor body 23 again in the two south poles 28, 29 for returning through the two permanent magnets of these poles closest to the pole 26. However, not all the magnetic flux lines extend in paths closed through the gap 34 between the stator and the rotor but some of them extend in magnetic flux paths never crossing said gap. This is due to the fact that the permanent magnets are buried in the rotor body and arranged so that rotor bridges 35 between the permanent magnets and the outer periphery of the rotor body and rotor bridges 36 between permanent magnets belonging to the same V are formed while creating a magnetic flux path between permanent magnets inside the rotor through which a portion of the magnetic flux between the permanent magnets is flowing in normal operation of the machine. These rotor bridges needed for obtaining mechanical stability of a rotor of this type with buried magnets may in this way be utilized and particularly designed for creating such magnetic flux paths of importance for a particular embodiment of the present invention, which will be explained further below.

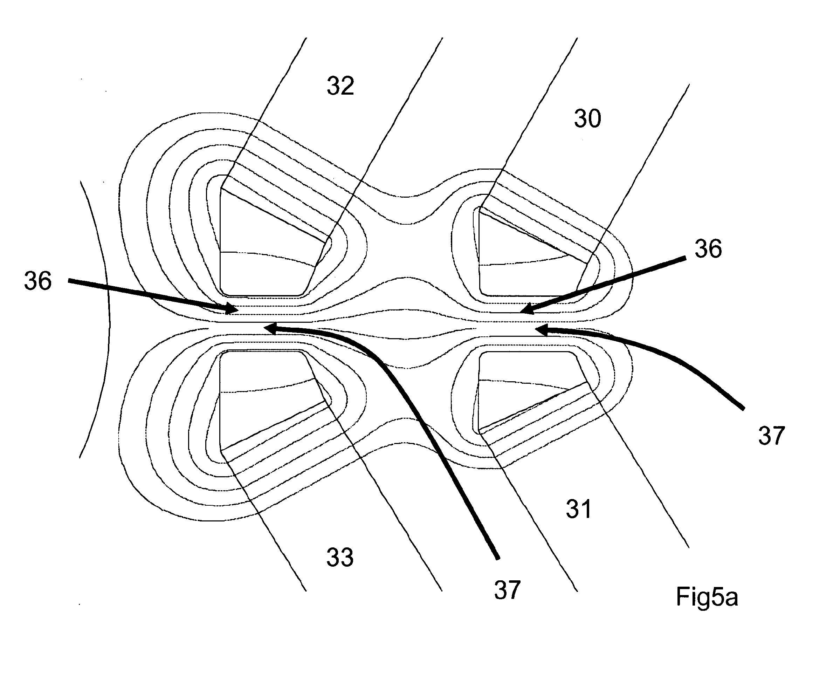

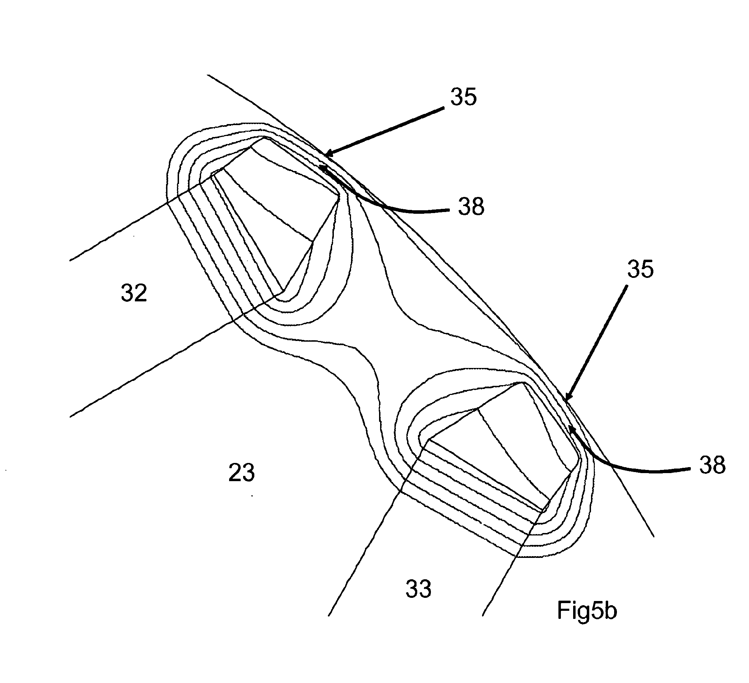

These magnetic flux paths 37, 38 in the rotor bridges 35 and 36, respectively, are schematically indicated in Fig 5, from which it appears that about 20 percent of the magnetic flux lines will be closed in these paths.

The basic idea of the present invention will now be explained. This basic idea is to select the material of the permanent magnets 30-33, the design of the rotor, i.e. how the permanent magnets are arranged therein, and the material of insulation means of an electrical insulation system of the machine, so that would upon occurrence of a short-circuit failure in connection with the stator winding in operation of the machine with rotating rotor the permanent magnets reach a threshold temperature T₀ as of which the magnetic flux from the permanent magnets in said gap 34 between the stator and the rotor is zero or not linked with the stator winding this will happen at a temperature T_{sw} in the stator winding resulting in a temperature Tᵢ of said insulating means being below the temperature Tₑᵥ at which the material of the insulating means will start to evaporate.

When a short-circuit failure occurs in connection with a stator winding, such as between the stator winding and earth (stator body) as a consequence of for instance introduction of any particle into the machine, the contactors 10, when present, will open or the converter 6 will otherwise be blocked, so that no energy is fed into the stator winding from this converter. However, the magnetic flux from the permanent magnets of the rotating rotor will continue to feed energy into the short-circuit as explained thoroughly further above. In the embodiment of the rotor shown in Fig 2 this will continue until the temperature of the permanent magnets 30-33 is raised to a level in which the entire magnetic flux remaining flows in the magnetic flux paths closed through said rotor bridges as shown in Fig 5a and 5b. This will happen at a temperature below the Curie temperature T_{C} of the material of the permanent magnets, so that T₀ will in this case be clearly below, such as at least 10°C or at least 20°C, below T_{C}.

When choosing NeFeB as material of the permanent magnets having a T_{c} of about 280°C, this means that said permanent magnets will stop to feed energy into the short-circuit when the temperature of the permanent magnets reaches 260-270°C. This may then typically result in a corresponding temperature T_{sw} in the stator winding, which in its turn may result in a corresponding temperature Tᵢ of insulating means of the machine in the order of 280-350°C. Accordingly, the material of said insulating means is to be selected so that the temperature Tₑᵥ at which the material thereof will start to evaporate is above this temperature Tᵢ, advantageously by at least 20°C and preferably by at least 50°C. It is in this case of permanent magnetic material and insulating means material suitable to design the machine so that these materials will never reach higher temperatures than about 200°C and 250°C, respectively, at normal operation of the machine.

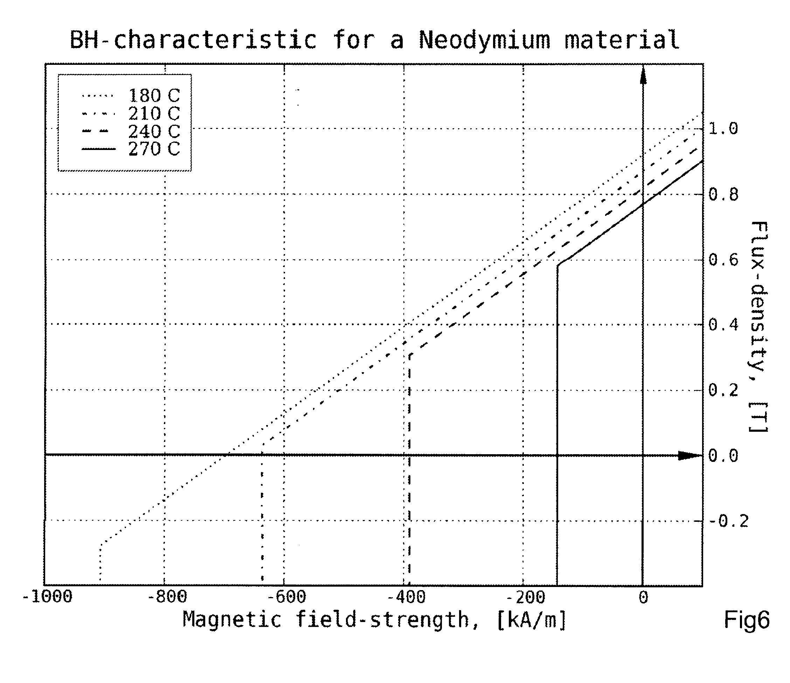

Fig 6 illustrates magnetic flux density versus magnetic field strength for NeFeB as material for a permanent magnet for different temperatures showing that the magnet will be practically demagnetized at 300°C.

Thus, the present invention results in an electric machine with an inherent short-circuit failure safety, since prevention of creation of smoke from evaporating insulating materials will be independent of any contactor function and independent of any motor cooling method, but dependent on choice of magnetic and insulating materials.

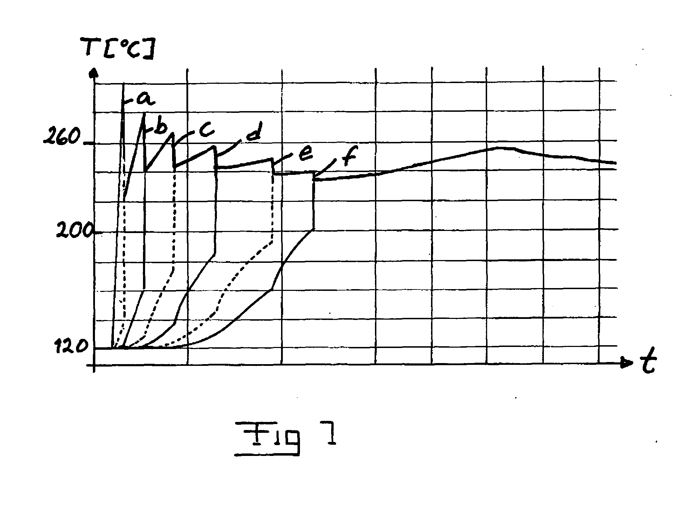

A further development of the present invention is to choose the material of said second insulating means having a fusing temperature T_{f} being at least 10°C, preferably at least 20°C, lower than the temperature T_{sw} in the stator winding at the threshold temperature T₀ of the permanent magnets upon occurrence of a short-circuit failure in connection with the stator winding. This means that said second insulating means will fuse and by that create an electric contact between adjacent conductors in a stator winding coil before the permanent magnets reaches the temperature T₀ and before the fusing temperature of the first insulating means is reached. Fig 7 shows what is happening when this occurs, in which a, b, c, d, e, and f shows the temperature in the conductors of the stator winding coil without any short-circuiting of adjacent conductors, with two, three, four, five, and six, respectively, adjacent conductors in the coil short-circuited. Such a short-circuiting of adjacent conductors results in a reduction of the number of turns in the coil and by that of the magnetic flux generated, so that the density of the current therein will be lowered and by that the temperature resulting from this current be lower. Thus, said second insulating means will fuse before the permanent magnets will reach said threshold temperature and start to counteract further temperature rise by a successive reduction of the number of turns in a said coil of the stator winding resulting in a potential possibility to save the permanent magnets and all parts of the electrical insulation system except for said second insulating means in the case of an occurrence of a short-circuit in connection with the stator winding of the machine.

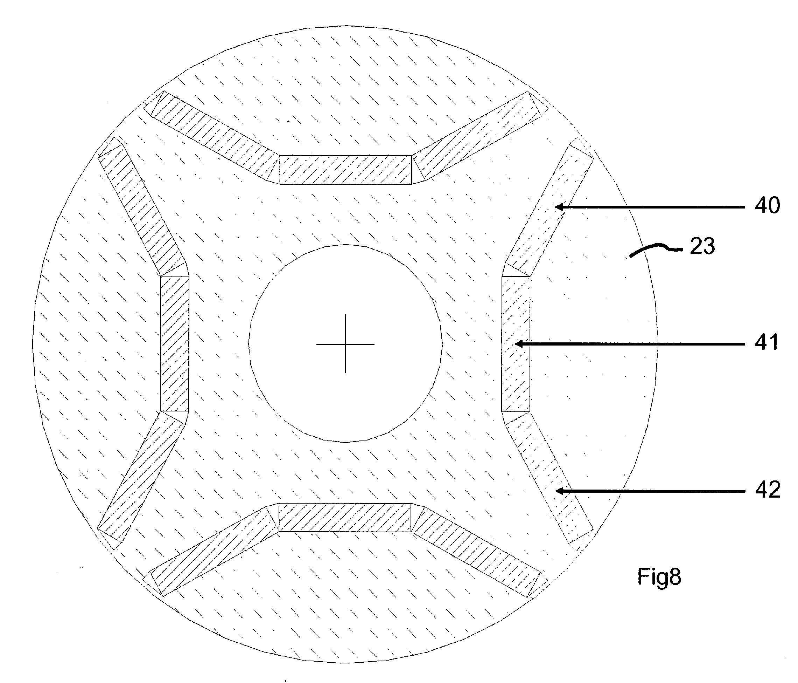

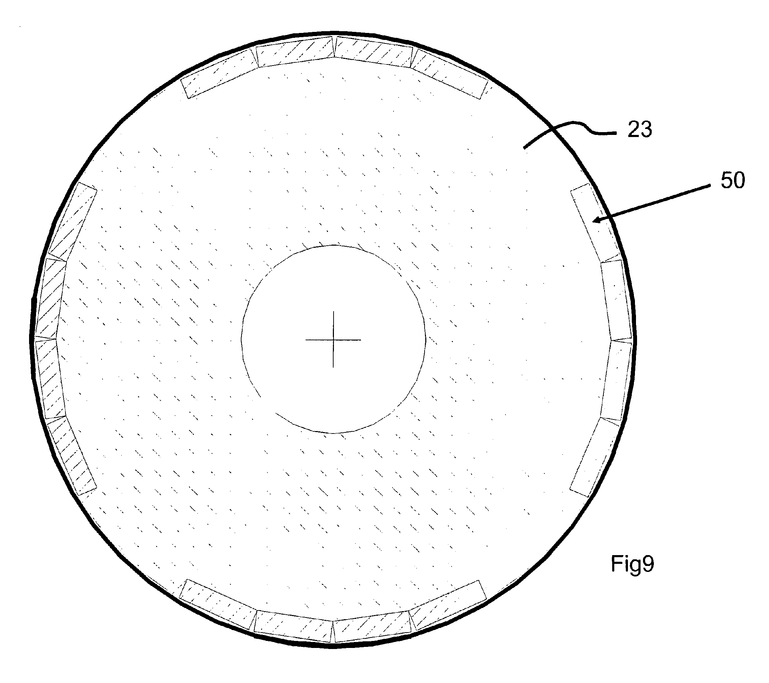

Fig 8 schematically shows an alternative rotor design with permanent magnets 40-42 arranged according to three different directions per pole and buried within the rotor body, whereas Fig 9 shows an alternative rotor design with permanent magnets 50 mounted at or close to the outer peripheral surface of the rotor, which means that the permanent magnets are of a material having a Curie temperature T_{C} substantially corresponding to said threshold temperature T₀. This design results in higher demands upon high temperature resistance of the insulating material used in said electric insulating system of the electric machine than in the case of buried permanent magnets in the rotor body resulting in a lower T₀ for a certain permanent magnet material.

The invention is of course not in any way restricted to the embodiments described above, but many possibilities to modifications thereof will be apparent to a person with skill in the art without departing from the scope of the invention as defined in the appended claims.

A track-bound vehicle according to the invention may have any number of electric machines according to the invention, such as 6 such machines for a two wagon train.

## Claims

1. A track-bound vehicle electric machine (8) configured to generate a traction force of a said vehicle (1) and comprising:
• a stator (11) having a stator body (12) with a stator winding (13) wound therearound and configured to electrically create a plurality of stator poles disposed around the inner periphery of the stator body,
• means (9) configured to connect said stator winding to an AC source or receiver,
• a rotor (22) rotatably disposed within said stator and having a plurality of permanent (24, 30-33, 40-42, 50) magnets, and
• an electrical insulation system with insulating means comprising first insulating means (20) insulating said stator winding with respect to earth by at least insulating it with respect to said stator body (12),
**characterized in that** the material of said permanent magnets, the design of said rotor and the material of insulating means of said electric insulating system are selected so that upon occurrence of a short-circuit failure in connection with said stator winding (13) in operation of said machine with rotating rotor (22) said permanent magnets reach a threshold temperature To as of which the magnetic flux from the permanent magnets in a gap between said stator body and the rotor is zero or not linked with said stator winding, which happens at a temperature T_{sw} in said stator winding resulting in a temperature Tᵢ of said insulating means being below the temperature Tₑᵥ at which the material of said insulating means will start to evaporate.

2. An electric machine according to claim 1, **characterized in that** the temperature Tᵢ of said insulating means at said threshold temperature Tₒ of said permanent magnets is at least 20°C, preferably at least 50°C below the temperature Tₑᵥ at which the material of said insulating means will start to evaporate.

3. An electric machine according to claim 1 or 2, **characterized in that** said threshold temperature T₀ of said permanent magnets is 40°C-150°C higher than the highest possible temperature of said permanent magnets in normal operation of said machine without any short-circuit failure occurrence.

4. An electric machine according to any of the preceding claims, **characterized in that** said permanent magnets (30-33, 40-42) are buried in a body (23) of the rotor having rotor bridges (35, 36) of ferromagnetic material between adjacent permanent magnets configured to create a magnetic flux path (37, 38) between said magnets inside the rotor through which a portion of the magnetic flux between said permanent magnets is flowing in normal operation of said machine.

5. An electric machine according to claim 4, **characterized in that** said permanent magnets (30-33) and rotor bridges (35, 36) are designed to have a said portion of 5% - 40%, or 15-35%, so that said threshold temperature T₀ will be reached when the magnetic flux between adjacent said permanent magnets has been reduced to be equal to said portion as a consequence of a temperature rise of the permanent magnets.

6. An electric machine according to any of claims 1-3, **characterized in that** said permanent magnets (50) are mounted at or close to the outer peripheral surface of said rotor (22), and that said permanent magnets are of a material having a Curie temperature T_{C} corresponding to said threshold temperature T₀.

7. An electric machine according to any of the preceding claims, **characterized in that** said material of said permanent magnets is NdFeB or ferrite.

8. An electric machine according to any of claims 1-6, **characterized in that** said material of said permanent magnets is SmCo.

9. An electric machine according to claim 7 or claim 8 dependent upon claim 4 or 5, **characterized in that** said first insulating means (20) surrounding said stator winding comprises insulating material such as mica/glass tapes, polyimide films and other materials impregnated and cured with a silicone or epoxy resin wound around said stator winding allowing the temperature thereof to at least temporarily reach 280°C - 350°C at said threshold temperature T₀ of said permanent magnets (30-33, 40-42).

10. An electric machine according to any of the preceding claims, **characterized in that** said stator winding (13) comprises coils (15, 16) each made of a plurality of individual conductors (18) in a bundle mutually insulated by being surrounded by a second insulating means (19) of said electrical insulation system in the form of a layer of a material having a fusing temperature T_{f} being at least 10°C lower than the fusing temperature of said first insulating means (20).

11. An electric machine according to claim 10, **characterized in that** said fusing temperature T_{f} of said second insulating means (19) is at least 10°C, preferably at least 20°C, lower than said temperature T_{SW} in said stator winding (13) at said threshold temperature T of said permanent magnets upon occurrence of a short-circuit failure in connection with the stator winding.

12. A driving arrangement for a track-bound vehicle, **characterized in that** it comprises an electric machine (8) according to any of claims 1-11 and a converter (6) configured to deliver an alternat-ing voltage to said stator winding.

13. A driving arrangement according to claim 12, **characterized in that** it further comprises a control device (7) for controlling said converter (6) by Pulse Width Modulation.

14. Use of an electric machine according to any of claims 1-11 in a driving arrangement for generating a traction force of a track-bound vehicle (1).

15. A track-bound vehicle having a driving arrangement for generating a traction force of the vehicle including at least one electric machine (8) according to any of claims 1-11.

## Patentansprüche

1. Ein elektrischer Antrieb (8) für ein schienengebundenes Fahrzeug zum Erzeugen einer Zugkraft für das Fahrzeug (1), aufweisend:
• einen Stator (11), umfassend einen Statorkörper (12) mit einer darum herumgewickelten Statorwicklung (13) und eingereichtet, eine Mehrzahl von Statorpolen elektrisch zu erzeugen, die um den Innenumfang des Statorkörpers herum angeordnet sind,
• Mittel (9), die dazu eingerichtet sind, die Statorwicklung mit einer Wechselstromquelle oder einem Receiver zu verbinden,
• einen Rotor (22), der drehbar innerhalb des Stators angeordnet ist und eine Mehrzahl von Permanentmagneten (24, 30-33, 40-42, 50) aufweist und
• ein System für die elektrische Isolierung mit Isolierungsmitteln, aufweisend erste Isolierungsmittel (20), die die Statorwicklung gegenüber Erdpotential isolieren, dadurch, dass die Statorwicklung mindestens gegenüber dem Statorkörper (12) isoliert ist,
**dadurch gekennzeichnet, dass** das Material der Permanentmagneten, die Ausgestaltung des Rotors und das Material der Isolierungsmittel des Systems für die elektrische Isolierung derart ausgewählt sind, dass beim Auftreten eines Kurzschlussfehlers in Verbindung mit der Statorwicklung (13) im Betrieb der Maschine mit dem drehenden Rotor (22) die Permanentmagneten eine Grenzwerttemperatur T₀ erreichen, bei der der Magnetfluss der Permanentmagneten in einem Spalt zwischen dem Statorkörper und dem Rotorkörper null ist oder nicht mit der Statorwicklung verknüpft ist, was bei einer Temperatur T_{SW} in der Statorwicklung passiert und zu einer Temperatur Tᵢ der Isolierungsmittel führt, die unter der Temperatur T_{cv} liegt, bei der das Material der Isolierungsmittel zu verdampfen beginnt.

2. Eine elektrische Maschine gemäß Anspruch 1, **dadurch gekennzeichnet, dass** die Temperatur Tᵢ der Isolierungsmittel bei der Grenzwerttemperatur T₀ der Permanentmagneten mindestens 20°C beträgt, vorzugsweise mindestens 50°C unter der Temperatur T_{cv} liegt, bei der das Material der Isolierungsmittel zu verdampfen beginnt.

3. Eine elektrische Maschine gemäß einem der Ansprüche 1 oder 2, **dadurch gekennzeichnet, dass** die Grenzwerttemperatur T₀ der Permanentmagneten 40°C bis 150°C höher liegt als die höchste mögliche Temperatur der Permanentmagneten im Normalbetrieb der Maschine ohne das Auftreten eines Kurzschlussfehlers.

4. Eine elektrische Maschine gemäß einem der vorangegangenen Ansprüche, **dadurch gekennzeichnet, dass** die Permanentmagneten (30-33, 40-42) eingelassen sind in einen Körper (23) des Rotors, aufweisend Rotorbrücken (35, 36) aus ferromagnetischem Material zwischen angrenzenden Permanentmagneten, die dazu eingerichtet sind, einen Magnetflusspfad (37, 38) zwischen den Magneten innerhalb des Rotors zu bilden, durch den im Normalbetrieb der Maschine ein Anteil des Magnetflusses zwischen den Permanentmagneten fließt.

5. Eine elektrische Maschine gemäß Anspruch 4, **dadurch gekennzeichnet, dass** die Permanentmagneten (30-33) und die Rotorbrücken (35, 36) derart ausgestaltet sind, dass sie den Anteil von 5% bis 40% oder 15-35% aufweisen, sodass die Grenzwerttemperatur T₀ erreicht wird, sobald der Magnetfluss zwischen den angrenzenden Permanentmagneten durch ein Ansteigen der Temperatur der Permanentmagneten auf diesen Anteil reduziert ist.

6. Eine elektrische Maschine gemäß einem der Ansprüche 1 bis 3, **dadurch gekennzeichnet, dass** die Permanentmagneten (50) an oder nahe der äußeren Umfangsfläche des Rotors (22) angebracht sind, und die Permanentmagneten aus einem Material bestehen, das eine Curie-Temperatur T_{c} hat, entsprechend der Grenzwerttemperatur T₀.

7. Eine elektrische Maschine gemäß einem der vorangegangenen Ansprüche, **dadurch gekennzeichnet, dass** das Material der Permanentmagneten NdFeB oder Ferrit ist.

8. Eine elektrische Maschine gemäß einem der Ansprüche 1 bis 6, **dadurch gekennzeichnet, dass** das Material der Permanentmagneten SmCo ist.

9. Eine elektrische Maschine gemäß einem der Ansprüche 7 oder 8, abhängig von einem der Ansprüche 4 oder 5, **dadurch gekennzeichnet, dass** die die Statorwicklung umgebenden ersten Isolierungsmittel (20) Isolierungsmaterial aufweisen, zum Beispiel Glimmer/Glas-Bänder, Polyimidfilme und anderen Materialien, die imprägniert und ausgehärtet sind mit einem Silikon oder Epoxidharz, um die Statorwicklung herumgewickelt sind und die bei der Grenzwerttemperatur T₀ der Permanentmagneten (30-33, 40-42) ein zumindest zeitweises Erreichen einer Temperatur von 280°C bis 350°C der Statorwicklung erlauben.

10. Eine elektrische Maschine gemäß einem der vorangegangenen Ansprüche, **dadurch gekennzeichnet, dass** die Statorwicklung (13) Spulen (15, 16) aufweist, wobei jede Spule aus einer Vielzahl von einzelnen Leitern (18) in einem Bündel besteht, dadurch gegeneinander isoliert, dass sie umgeben sind von zweiten Isolierungsmitteln (19) des Systems für die elektrische Isolierung in Form von Schichten eines Materials mit einer Schmelztemperatur T_{f}, die mindestens 10°C geringer ist als die Schmelztemperatur der ersten Isolierungsmittel (20).

11. Eine elektrische Maschine gemäß dem Anspruch 10, **dadurch gekennzeichnet, dass** die Schmelztemperatur T_{f} der zweiten Isolierungsmittel (19) mindestens 10°C, vorzugsweise mindestens 20°C geringer ist als die Temperatur T_{SW} in der Statorwicklung (13) bei der Grenzwerttemperatur T₀ der Permanentmagneten bei Auftreten eines Kurzschlussfehlers in Verbindung mit der Statorwicklung.

12. Eine Antriebsvorrichtung für ein schienengebundenes Fahrzeug, **dadurch gekennzeichnet, dass** es eine elektrische Maschine (8) gemäß einem der Ansprüche 1 bis 11 aufweist sowie einen Konverter (6) der dazu eingerichtet ist, die Statorwicklung mit einer Wechselspannung zu versorgen.

13. Eine Antriebsvorrichtung gemäß dem Anspruch 12, **dadurch gekennzeichnet, dass** sie ferner eine Steuerungseinheit (7) zur Steuerung des Konverters durch Pulsweitenmodulation aufweist.

14. Die Verwendung einer elektrischen Maschine gemäß einem der Ansprüche 1 bis 11 in einer Antriebsvorrichtung zur Erzeugung einer Zugkraft für ein schienengebundenes Fahrzeug (1).

15. Ein schienengebundenes Fahrzeug aufweisend eine Antriebsvorrichtung zur Erzeugung einer Zugkraft für das Fahrzeug umfassend mindestens eine elektrische Maschine (8) gemäß einem der Ansprüche 1 bis 11.

## Revendications

1. Machine électrique (8) de véhicule roulant sur voies, configurée pour engendrer une force de traction du dit véhicule (1) et comprenant :
- un stator (11) ayant un corps de stator (12) avec un bobinage de stator (13) enroulé autour de celui-ci et configuré pour créer électriquement une pluralité de pôles du stator placés autour de la périphérie interne du corps du stator,
- un moyen (9) configuré afin de connecter le dit bobinage du stator à une source ou à un récepteur de courant alternatif,
- un rotor (22) placé de manière rotative à l'intérieur du dit stator et ayant une pluralité d'aimants permanents (24, 30-33, 40-42, 50), et
- un système d'isolation électrique avec un moyen d'isolation comprenant premièrement un moyen d'isolation (20) isolant le dit bobinage du stator de la terre en l'isolant au moins du dit corps du stator (12),
**caractérisée en ce que** le matériau des dits aimants permanents, la conception du dit rotor et le matériau du moyen d'isolation du dit système d'isolation électrique sont choisis de manière à ce qu'en cas d'échec du court-circuit en connexion avec le dit bobinage du stator (13) pendant le fonctionnement de la dite machine avec le rotor en rotation (22) les dits aimants permanents atteignent une température seuil T₀ à laquelle le flux magnétique provenant des aimants permanents dans un intervalle entre le dit corps du stator et le rotor est de zéro ou n'est pas lié au dit bobinage du stator, ce qui a lieu à une température T_{SW} dans le dit bobinage du stator ce qui résulte en une température Tᵢ du dit moyen d'isolation qui est inférieure à la température Tₑᵥ à laquelle le matériau du dit moyen d'isolation commence à se vaporiser.

2. Machine électrique selon la revendication 1, **caractérisée en ce que** la température Tᵢ du dit moyen d'isolation à la dite température de seuil T₀ des dits aimants permanents est d'au moins 20 °C, de préférence inférieure d'au moins 50 °C à la température Tₑᵥ à laquelle le matériau du dit moyen d'isolation commence à se vaporiser.

3. Machine électrique selon la revendication 1 ou 2, **caractérisée en ce que** la dite température de seuil T₀ des dits aimants permanents est supérieure de 40 à 150 °C à la température la plus élevée possible des dits aimants permanents en fonctionnement normal de la dite machine sans aucun événement d'échec du court-circuit.

4. Machine électrique selon l'une quelconque des revendications précédentes, **caractérisée en ce que** les dits aimants permanents (30-33, 40-42) sont noyés dans un corps (23) du rotor ayant des ponts de rotor (35, 36) de matériau ferromagnétique entre des aimants permanents adjacents configurés pour créer un circuit de flux magnétique (37, 38) entre les dits aimants à l'intérieur du rotor au travers duquel une partie du flux magnétique entre les dits aimants permanents circule pendant le fonctionnement normal de la dite machine.

5. Machine électrique selon la revendication 4, **caractérisée en ce que** les dits aimants permanents (30-33) et les ponts du rotor (35, 36) sont conçus pour avoir une dite partie de 5%-40% ou 15%-35%, si bien que la dite température de seuil T₀ sera atteinte quand le courant magnétique entre les dits aimants permanents adjacents aura été réduit pour être égal à la dite partie comme conséquence d'une augmentation de température des aimants permanents.

6. Machine électrique selon l'une quelconque des revendications 1 à 3, **caractérisée en ce que** les dits aimants permanents (50) sont montés au niveau ou à proximité de la surface périphérique externe du dit rotor (22), et que les dits aimants permanents sont d'un matériau ayant une température de Curie T_{c} correspondant à la dite température de seuil T₀.

7. Machine électrique selon l'une quelconque des revendications précédentes, **caractérisée en ce que** le dit matériau des dits aimants permanents est du NdFeB ou de la ferrite.

8. Machine électrique selon l'une quelconque des revendications 1 à 6, **caractérisée en ce que** le dit matériau des dits aimants permanents est du SmCo.

9. Machine électrique selon la revendication 7 ou 8 dépendant de la revendication 4 ou 5, **caractérisée en ce que** le dit premier moyen d'isolation (20) entourant le dit bobinage du stator comprend un matériau isolant tel que des bandes de mica/verre, des films de polyimide et d'autres matériaux imprégnés et vulcanisés avec une résine de silicone ou d'époxy enroulée autour du dit bobinage du stator ce qui permet à sa température d'atteindre au moins temporairement 280-350 °C à la dite température de seuil T₀ des dits aimants permanents (30-33, 40-42).

10. Machine électrique selon l'une quelconque des revendications précédentes, **caractérisée en ce que** le dit bobinage du stator (13) comprend des bobines (15, 16) chacune faite d'une pluralité de conducteurs individuels (18) dans un faisceau mutuellement isolés en étant entourés par un deuxième moyen d'isolation (19) du dit système d'isolation électrique sous forme d'une couche d'un matériau ayant une température de fusion T_{f} inférieure d'au moins 10 °C à la température de fusion du dit premier moyen d'isolation (20).

11. Machine électrique selon la revendication 10, **caractérisée en ce que** la dite température de fusion T_{f} du dit deuxième moyen d'isolation (19) est inférieure d'au moins 10 °C, de préférence d'au moins 20 °C, à la dite température T_{sw} dans le dit bobinage du stator (13) à la dite température de seuil T₀ des dits aimants permanents en cas d'événements d'un échec du court-circuit en connexion avec le bobinage du stator.

12. Installation d'entraînement pour un véhicule roulant sur voies, **caractérisée en ce qu'**elle comprend une machine électrique (8) selon l'une quelconque des revendications 1 à 11 et un convertisseur (6) configuré pour délivrer une tension alternative au dit bobinage du stator.

13. Installation d'entraînement selon la revendication 12, **caractérisée en ce qu'**elle comprend en outre un dispositif de contrôle (7) pour contrôleur le dit convertisseur par modulation de largeur d'impulsion.

14. Utilisation d'une machine électrique selon l'une quelconque des revendications 1 à 11 dans une installation d'entraînement pour engendrer une force de traction d'un véhicule roulant sur des voies (1).

15. Véhicule roulant sur des voies ayant une installation d'entraînement pour générer une force de traction du véhicule incluant au moins une machine électrique (8) selon l'une quelconque des revendications 1 à 11.
